# EUROPEAN PATENT APPLICATION

(11) **EP 4 675 936 A1**
(43) Date of publication of application: **07.01.2026**
(21) Application number: 24792869.0
(22) Date of filing: 22.03.2024
(51) Int. Cl.: H04B 7/06, H04B 1/3827, H04B 17/10, H04W 84/12, H04W 88/06, H04W 52/36, H04B 17/318, G06F 1/16

(54) **ELECTRONIC DEVICE AND METHOD FOR CHANGING TRANSMISSION ANTENNA PATH USING SAME**

(30) Priority: 20.04.2023 KR 20230051835; 06.07.2023 KR 20230087536
(71) Applicant: Samsung Electronics Co., Ltd., Suwon-si, Gyeonggi-do 16677 (KR)
(72) Inventor: CHA, Jaemoon, Suwon-si, Gyeonggi-do 16677 (KR); PARK, Jaewoo, Suwon-si, Gyeonggi-do 16677 (KR); SHIN, Seunghun, Suwon-si, Gyeonggi-do 16677 (KR); LEE, Yeonjoo, Suwon-si, Gyeonggi-do 16677 (KR); CHOI, Wonjin, Suwon-si, Gyeonggi-do 16677 (KR); CHOI, Jaeyoung, Suwon-si, Gyeonggi-do 16677 (KR)
(74) Representative: Nederlandsch Octrooibureau
(86) International application number: PCT/KR2024/003628
(87) International publication number: WO 2024/219682

(57) **Abstract**

The electronic device may comprise a first antenna, a second antenna disposed at a location different from a location in which the first antenna is disposed, and a processor. The processor may, on the basis of the magnitude of the maximum average power of a signal output through the first antenna to satisfy a time average specific absorption rate (SAR) configured in the electronic device and the maximum transmit power limit of a signal output through at least one of the first antenna and the second antenna configured by a cellular network, select an antenna to output the signal, from among the first antenna and the second antenna. Alternatively, the processor may select an antenna to output a signal on the basis of a difference between the magnitude of the maximum average power of a signal output through the first antenna and the magnitude of the maximum average power of a signal output through the second antenna.

## Description

### [Technical Field]

Embodiments of the present disclosure relate to an electronic device and a method for changing a transmission antenna path using the same.

### [Background Art]

To meet the increasing demand for wireless data traffic since the commercialization of 4G communication systems, efforts are being made to develop 5G communication systems. To achieve high data transmission rates and provide faster data transmission speeds, 5G communication systems are also being considered for implementation not only in a high-frequency band used in 3G and long term evolution (LTE) communication systems but also in an ultra-high-frequency band.

A scheme of implementing a 5G communication system may include a standalone (SA) scheme and a non-standalone (NSA) scheme. In particular, the NSA scheme may be a scheme of using LTE communication and new radio (NR) communication together. In the NSA scheme, the electronic device may confirm whether reception signal quality related to at least two antennas performing LTE communication and reception signal quality related to at least two antennas performing NR communication satisfy a reference value, and change an antenna for transmitting data to an antenna satisfying the reference value.

The above-described information may be provided as related art for the purpose of assisting in understanding the present disclosure. No claim or determination is made as to whether any of the above-described contents is applicable as prior art related to the present disclosure.

### [Disclosure of Invention]

### [Technical Problem]

An electronic device 101 aims to overcome the limitation that it is difficult to perform antenna switching due to a reduction in a relative difference of reference signal received power (RSRP) values on each antenna path when a maximum average power value (i.e., average power limit) is lower than a designated level. The maximum average power value may refer to the maximum power value satisfying a specific absorption rate (SAR) on an antenna, among power values averaged over a certain period of time.

The electronic device may include a first antenna, a second antenna disposed at a location different from a location where the first antenna is disposed, and a processor. The processor may select, based on a magnitude of maximum average power of a signal output via the first antenna to satisfy a time average specific absorption rate (SAR) configured in the electronic device and a maximum transmit power limit of a signal output via at least one of the first antenna and the second antenna configured by a cellular network, the antenna to output the signal from among the first antenna and the second antenna. Alternatively, the processor may select, based on a difference between the magnitude of the maximum average power of the signal output via the first antenna to satisfy the specific absorption rate (SAR) configured in the electronic device and the magnitude of the maximum average power of the signal output via the second antenna to satisfy the specific absorption rate (SAR) configured in the electronic device, the antenna to output the signal from among the first antenna and the second antenna.

A method for operating an electronic device may include an operation of selecting, based on a magnitude of maximum power of a signal output via the first antenna to satisfy a specific absorption rate (SAR) configured in the electronic device and a maximum transmit power level of a signal output via at least one of the first antenna and the second antenna configured by a cellular network, the antenna to output the signal from among the first antenna and the second antenna; and an operation of selecting, based on a difference between a magnitude of maximum power of a signal output via the first antenna to satisfy the specific absorption rate (SAR) configured in the electronic device and a magnitude of maximum power of a signal output via the second antenna to satisfy the specific absorption rate (SAR) configured in the electronic device, the antenna to output the signal from among the first antenna and the second antenna.

The electronic device according to the present document may prevent a backoff operation that may occur in a situation where a SAR margin is reduced to reduce call drop and mute phenomenon.

### [Brief Description of Drawings]

FIG. 1 is a block diagram of an electronic device in a network environment according to various embodiments.
FIG. 2 is a block diagram of the electronic device for supporting legacy network communication and 5G network communication according to an embodiment of the present disclosure.
FIG. 3 illustrates a network environment of the electronic device that transmits data using a plurality of communication schemes according to an embodiment of the present disclosure.
FIG. 4 is a cross-sectional diagram of the electronic device according to an embodiment.
FIG. 5 illustrates a location of an antenna on the electronic device according to an embodiment.
FIG. 6A illustrates a communication situation via Wi-Fi according to a comparative embodiment.
FIG. 6B illustrates an embodiment in which a method other than antenna switching is used to prevent backoff in a communication situation via Wi-Fi.
FIG. 7 sequentially illustrates a method for changing a transmission antenna path of an electronic device according to an embodiment.
FIGS. 8A and 8B are flowcharts illustrating conditions for changing a transmission antenna path of an electronic device according to an embodiment.
FIGS. 9A and 9B are flowcharts illustrating the conditions for changing the transmission antenna path of the electronic device according to an embodiment.

### [Mode for the Invention]

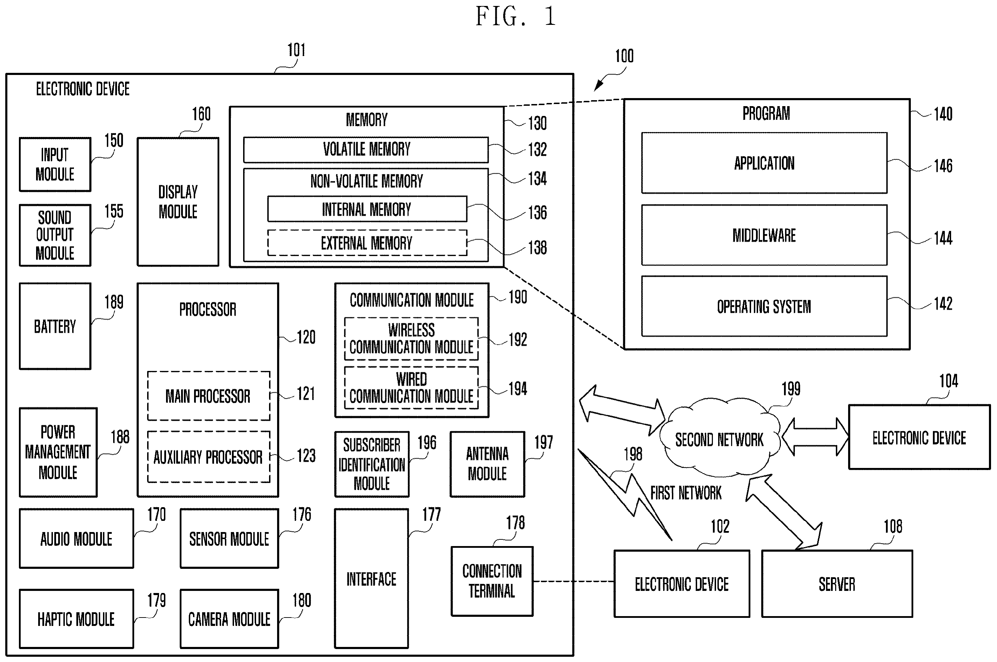

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

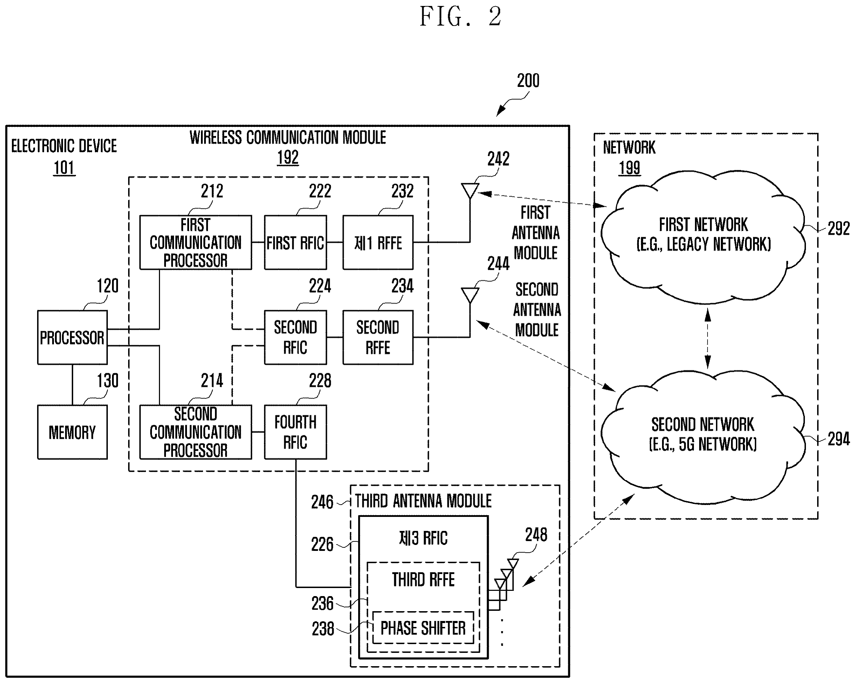

FIG. 2 is a block diagram 200 of the electronic device 101 for supporting legacy network communication and 5G network communication according to an embodiment of the present disclosure.

Referring to FIG. 2, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include the processor 120 and the memory 130. The second network 199 may include a first network 292 and a second network 294. According to another embodiment, the electronic device 101 may further include at least one of the components described in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least a portion of the wireless communication module 192. According to another embodiment, the fourth RFIC 228 may be omitted or included as a portion of the third RFIC 226.

The first communication processor 212 may support establishment of a communication channel in a band to be used for wireless communication with the first network 292, and legacy network communication via the established communication channel. According to various embodiments, the first network 292 may be a legacy network including a second generation (2G), 3G, 4G, or long term evolution (LTE) network. The second communication processor 214 may support establishment of a communication channel corresponding to a designated band (e.g., about 6 GHz to about 60 GHz) among the bands to be used for the wireless communication with the second network 294, and 5G network communication via the established communication channel. According to various embodiments, the second network 294 may be a 5G network defined by the 3GPP. Additionally, according to an embodiment, the first communication processor 212 or the second communication processor 214 may support establishment of a communication channel corresponding to another designated band (e.g., about 6 GHz or less) among the bands to be used for wireless communication with the second network 294, and the 5G network communication via the established communication channel. According to an embodiment, the first communication processor 212 and the second communication processor 214 may be implemented in a single chip or a single package. According to various embodiments, the first communication processor 212 or the second communication processor 214 may be formed in a single chip or a single package with the processor 120, the auxiliary processor 123, or the communication module 190.

Upon transmission, the first RFIC 222 may convert a baseband signal generated by the first communication processor 212 into a radio frequency (RF) signal of about 700 MHz to about 3 GHz used in the first network 292 (e.g., a legacy network). Upon reception, an RF signal may be acquired from the first network 292 (e.g., a legacy network) via an antenna (e.g., the first antenna module 242) and may be preprocessed via an RFFE (e.g., the first RFFE 232). The first RFIC 222 may convert the preprocessed RF signal into a baseband signal so that the preprocessed RF signal may be processed by the first communication processor 212.

Upon transmission, the second RFIC 224 may convert the baseband signal generated by the first communication processor 212 or the second communication processor 214 into an RF signal (hereinafter, a 5G Sub6 RF signal) of a Sub6 band (e.g., about 6 GHz or less) used in the second network 294 (e.g., a 5G network). Upon reception, the 5G Sub6 RF signal may be acquired from the second network 294 (e.g., the 5G network) via the antenna (e.g., the second antenna module 244) and preprocessed via the RFFE (e.g., the second RFFE 234). The second RFIC 224 may convert the preprocessed 5G Sub6 RF signal into the baseband signal so that the preprocessed 5G Sub6 RF signal may be processed by the corresponding communication processor among the first communication processor 212 and the second communication processor 214.

The third RFIC 226 may convert the baseband signal generated by the second communication processor 214 into an RF signal (hereinafter, a 5G Above6 RF signal) of a 5G Above6 band (e.g., about 6 GHz to about 60 GHz) to be used in the second network 294 (e.g., the 5G network). Upon reception, the 5G Above6 RF signal may be acquired from the second network 294 (e.g., the 5G network) via the antenna (e.g., the antenna 248) and preprocessed via the third RFFE 236. The third RFIC 226 may convert the preprocessed 5G Above6 RF signal into the baseband signal so that the preprocessed 5G Above6 RF signal may be processed by the second communication processor 214. According to an embodiment, the third RFFE 236 may be formed as a portion of the third RFIC 226.

According to an embodiment, the electronic device 101 may include the fourth RFIC 228 separately from or at least as a portion of the third RFIC 226. In this case, the fourth RFIC 228 may convert the baseband signal generated by the second communication processor 214 into an RF signal (hereinafter, referred to as an IF signal) of an intermediate frequency band (e.g., about 9 GHz to about 11 GHz) and then transmit the IF signal to the third RFIC 226. The third RFIC 226 may convert the IF signal into the 5G Above6 RF signal. Upon reception, the 5G Above6 RF signal may be received from the second network 294 (e.g., the 5G network) via the antenna (e.g., the antenna 248) and converted into the IF signal by the third RFIC 226. The fourth RFIC 228 may convert the IF signal into the baseband signal so that the IF signal may be processed by the second communication processor 214.

According to an embodiment, the first RFIC 222 and the second RFIC 224 may be implemented as at least a portion of a single chip or a single package. According to an embodiment, the first RFFE 232 and the second RFFE 234 may be implemented as at least a portion of a single chip or a single package. According to an embodiment, at least one antenna module of the first antenna module 242 or the second antenna module 244 may be omitted or coupled to with another antenna module to process RF signals of multiple corresponding bands.

According to an embodiment, the third RFIC 226 and the antenna 248 may be disposed on the same substrate to form the third antenna module 246. For example, the wireless communication module 192 or the processor 120 may be disposed on a first substrate (e.g., a main PCB). In this case, the third RFIC 226 may be disposed on a partial region (e.g., lower surface) of a second substrate (e.g., sub PCB) separate from the first substrate, and the antenna 248 may be disposed on another partial region (e.g., upper surface), thereby forming the third antenna module 246. By disposing the third RFIC 226 and the antenna 248 on the same substrate, it is possible to reduce a length of a transmission line between the third RFIC 226 and the antenna 248. This may reduce, for example, a loss (e.g., attenuation) of signals in a high-frequency band (about 6 GHz to 60 GHz) used in the 5G network communication due to the transmission line. As a result, the electronic device 101 may improve the quality or speed of communication with the second network 294 (e.g., the 5G network).

According to an embodiment, the antenna 248 may be formed as an antenna array including a plurality of antenna elements that may be used for beamforming. In this case, the third RFIC 226 may include, as a part of the third RFFE 236, for example, a plurality of phase shifters 238 corresponding to a plurality of antenna elements. Upon transmission, each of the plurality of phase shifters 238 may shift a phase of the 5G Above6 RF signal to be transmitted to the outside (e.g., a base station of the 5G network) of the electronic device 101 via the corresponding antenna element. Upon reception, each of the plurality of phase shifters 238 may shift the phase of the 5G Above6 RF signal received from the outside via the corresponding antenna element to the same or substantially the same phase. This enables the transmission or reception via the beamforming between the electronic device 101 and the outside.

The second network 294 (e.g., the 5G network) may operate independently (e.g., standalone (SA)) from the first network 292 (e.g., the legacy network) or operate while connected (e.g., non-stand alone (NSA)) to the first network 292 (e.g., the legacy network). For example, the 5G network may only have an access network (e.g., a 5G radio access network (RAN) or next generation RAN (NG RAN)) and may not include core network (e.g., next generation core (NGC)). In this case, the electronic device 101 may access the access network of the 5G network and then access an external network (e.g., the Internet) under the control of the core network (e.g., evolved packed core (EPC)) of the legacy network. Protocol information (e.g., LTE protocol information) for communicating with the legacy network or protocol information (e.g., new radio (NR) protocol information) for communicating with the 5G network may be stored in the memory 130 and accessed by other components (e.g., the processor 120, the first communication processor 212, or the second communication processor 214).

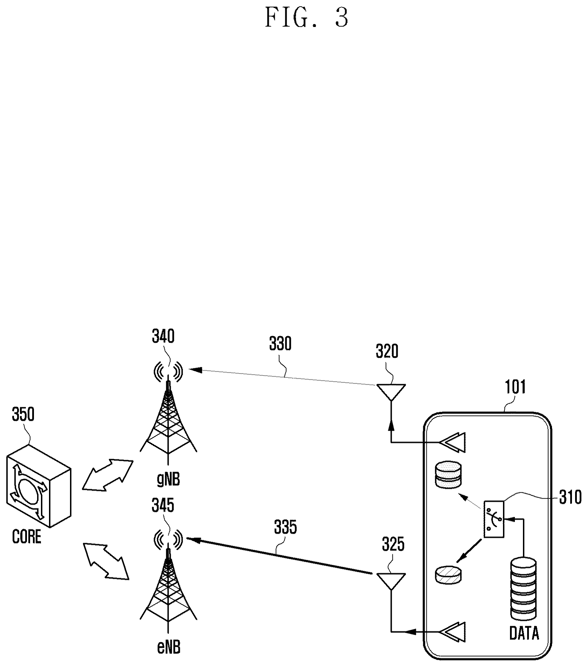

FIG. 3 illustrates a network environment of the electronic device 101 that transmits data using a plurality of communication schemes according to an embodiment of the present disclosure.

Referring to FIG. 3, the electronic device 101 may transmit data via multiple networks using multiple transmission paths. The electronic device 101 includes a switch 310, and may transmit data using multiple transmission paths or using one transmission path.

The electronic device 101 may transmit data in a first communication scheme using a first antenna 320 (e.g., the second antenna module 244 or the third antenna module 246 of FIG. 2), and transmit data in a second communication scheme using a second antenna 325 (e.g., the first antenna module 242 of FIG. 2). For example, when the first communication scheme is the 5G communication, the electronic device 101 may be connected to a gNB 340 using the first antenna 320 (330). When the second communication scheme is LTE communication, the electronic device 101 may be connected to an eNB 345 using the second antenna 325 (335). Both the gNB 340 and the eNB 345 may be connected to one core network 350.

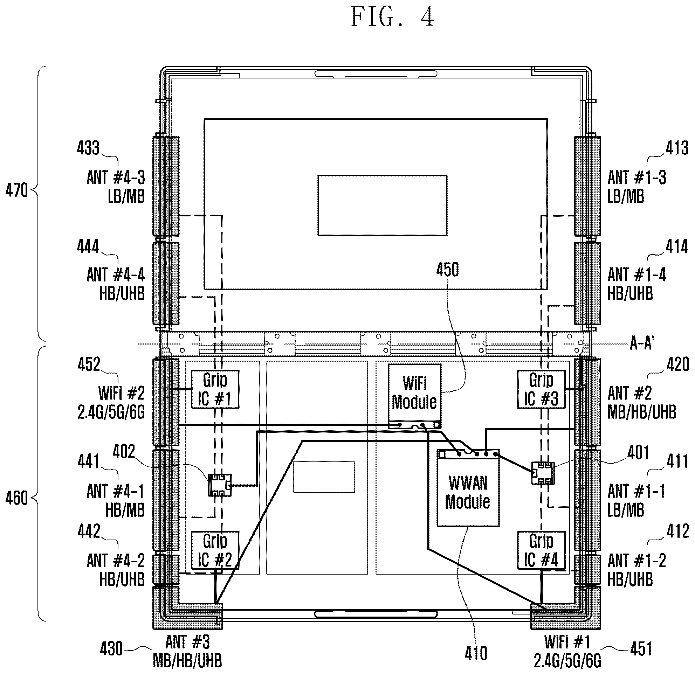

FIG. 4 is a cross-sectional diagram of the electronic device according to an embodiment.

According to an embodiment, an electronic device (e.g., electronic device 200 of FIG. 2) may include a wireless communication circuit 410, a Wi-Fi communication circuit 450, and a plurality of antennas 411, 412, 413, 414, 420, 430, 433, 441, 442, 444, 451, and 452. The electronic device 200 may include a system unit 460 and an upper end portion 470.

According to an embodiment, the wireless communication circuit 410 may be electrically connected to a second antenna 420 and a third antenna 430. The wireless communication circuit 410 may be electrically connected to a 1-1th antenna 411, a 1-2th antenna 412, a 1-3th antenna 413, and a 1-4th antenna 414 via a first switch 401. The wireless communication circuit 410 may be electrically connected to a 4-1th antenna 441, a 4-2th antenna 442, a 4-3th antenna 433, and a 4-4th antenna 444 via a second switch 402.

According to an embodiment, the Wi-Fi communication circuit 450 may be electrically connected to a Wi-Fi #1 451 and a Wi-Fi #2 452.

The electronic device 200 may include a structure that determines an antenna resonance formation frequency and bandwidth by a length of a metal frame. The electronic device according to FIG. 2A may be used by disposing components, such as a transceiver, LPAMID, FEM, diplexer, and a filter, on a PCB board. The electronic device 101 may electrically transmit a band-specific signal generated from the transceiver to a specific antenna using the diplexer.

In addition, the electronic device 200 may use the metal frame as the antenna. When a distance between a human body and the electronic device 200 is reduced, the resonance performance of the antenna implemented to correspond to a target frequency may be reduced. When the human body approaches, the resonance frequency of the antenna may change. In the structure using the metal frame as the antenna, there may be no equipment between the antenna of the electronic device 200 and the human body. The human body may be in direct contact with the antenna on the electronic device 200. The energy radiated from the antenna of the electronic device 200 may be absorbed by the human body. In the situation where the antenna and the human body are in direct contact with each other, the electronic device 200 may lower the energy radiated from the antenna to satisfy usage standards (e.g., SAR radio standard, electromagnetic wave absorption rate, power density standard, etc.) that limit electromagnetic waves to a certain level due to the problem that the electromagnetic waves may have a negative effect on the human body. When the energy radiated from the antenna is lowered, the data transmission performance of the antenna may deteriorate.

According to an embodiment, the electronic device 200 may solve the problem of covering various bands using the limited number of antennas, the problem of difficulty in satisfying the SAR due to the direct contact between the antenna and the human body, and the problem of deterioration of the data transmission performance while lowering the transmission power of the antenna to satisfy the SAR. The operation of the electronic device 200 in this document is described based on the SAR, but the same function may also be applied to the power density (PD). In addition, the electronic device 200 may adjust the maximum power value so that the value of power averaged over a certain period of time may satisfy the specific absorption rate (SAR) on the antenna. The electronic device 200 may connect multiple antennas to a single port using the first switch 401 and the second switch 402. According to an embodiment, the electronic device 200 may use the first switch 401 and the second switch 402 to separate the antennas for each frequency band. For example, when the human body approaches a specific antenna, the electronic device 200 may use another antenna disposed at a location that does not approach the human body using the first switch 401 and the second switch 402.

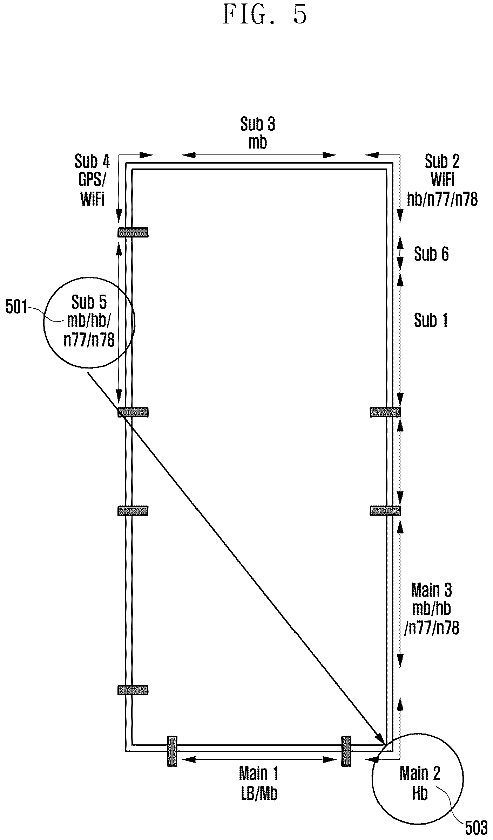

FIG. 5 illustrates the location of the antenna on the electronic device according to an embodiment.

According to FIG. 5, the electronic device (e.g., the electronic device 101 of FIG. 1) may include a first antenna 501 that supports first communication and a second antenna 503 that supports second communication. The number of antennas illustrated in FIG. 5 is only an example, and the number of antennas that the electronic device 101 may include is not limited thereto. In addition, the location of the antenna illustrated in FIG. 5 is only an example, and the location of the antenna is not limited to that illustrated in FIG. 5.

Referring to FIG. 5, the electronic device 101 may include the first antenna 501 and the second antenna 503 that are physically disposed at separate locations.

For example, the processor (e.g., the processor 120 of FIG. 1) may determine whether to switch to the second antenna 503 based on specific conditions in a situation where the electronic device 101 performs communication using the first antenna 501. According to an embodiment, the specific conditions for determining whether to switch antennas may include a maximum average power value (i.e.,average power limit) satisfying the specific absorption rate (SAR) on the first antenna 501 and the maximum power value (i.e., Pmax: antenna power max) for the first antenna 501.

According to an embodiment, the processor 120 may determine the antenna to transmit the wireless signal as the second antenna 503 based on that a difference between the maximum power value that the electronic device 101 may have on the first antenna 501 and the average maximum power value satisfying the time average specific absorption rate (SAR) on the first antenna 501 exceeds a designated level. According to an embodiment, the difference between the maximum power value that the electronic device 101 may have on the first antenna 501 and the average maximum power value satisfying the time average specific absorption rate (SAR) on the first antenna 501 may refer to a value obtained by subtracting the average power limit from Pmax (i.e., antenna power max value) of the first antenna 501. Pmax may include the maximum power value that the electronic device 101 may have on the first antenna 501. The average power limit may include the maximum power value satisfying the specific absorption rate (SAR) of the value of power averaged over a certain period of time on the first antenna 501.

The processor 120 may determine the antenna to transmit the wireless signal as the second antenna 503 based on that the value obtained by subtracting the average power limit from Pmax exceeds a designated value (e.g., 10 dB). Conversely, in the situation where the signal is transmitted via the second antenna 503, the processor 120 may determine the antenna to transmit the wireless signal as the first antenna 501 based on that the value obtained by subtracting the average power limit from the Pmax of the second antenna exceeds a designated value (e.g., 10 dB).

According to an embodiment, when the power value for satisfying the SAR is relatively lower compared to the maximum power on the path transmitting the signal via the first antenna 501, the value obtained by subtracting Plimit from the Pmax of the Pmax antenna may exceed a designated value (e.g., 10 dB). For example, when the power value for satisfying the SAR is lowered, the electronic device 101 may experience an insufficient margin phenomenon due to backoff caused by an insufficient margin for satisfying the SAR. According to an embodiment, a method for adjusting an output of an antenna to satisfy SAR includes a method for setting a fixed value criterion (e.g., power limit) and confirming whether to exceed the corresponding criterion, and a time average SAR (TAS) control scheme for confirming, based on an average value criterion (e.g., average power limit), that the average power does not exceed the SAR criterion. For example, the time average SAR scheme is a scheme that continuously confirms the transmit power (TX power) at a certain time interval. The TAS scheme may control the power so that the average value does not exceed the power limit (Plimit) via the Plimit value that should not be exceeded on average value.

The backoff operation may refer to an operation that does not use power to the maximum to stably operate the electronic device 101 but limits the power to use only up to a point below a certain level (e.g., -3 dB). The transmit power may be insufficient due to the backoff operation, so communication may not proceed smoothly. The processor 120 may replace the antenna used for transmission to maintain the smooth communication. According to an embodiment, the backoff operation may include an operation of lowering the transmit power of the antenna of the electronic device 101 to a certain level. When a user makes a call in the electronic device 101, a user's head may be close to the electronic device 101, so the power may be lowered to lower the amount of electromagnetic waves emitted in order to meet the SAR standard. When the electronic device 101 lowers the power, the communication performance may deteriorate. According to an embodiment, the electronic device 101 may be replaced with another antenna so that the communication performance is not deteriorated.

However, in the situation where the Plimit is less than the designated level (e.g., 13 dB), the electronic device according to a comparative embodiment may experience a reduced difference in reference signal received power (RSRP) values on each antenna path, failing to satisfy the antenna switching conditions, which may make it difficult to replace the antenna used for transmission. The Plimit may refer to the magnitude of maximum power of the signal output via the first antenna to satisfy the specific absorption rate (SAR) configured in the electronic device. Alternatively, the Plimit may refer to the magnitude of maximum power of the signal output via the second antenna to satisfy the specific absorption rate (SAR) configured in the electronic device. The second antenna may be disposed at a different location from a location where the first antenna is disposed on the electronic device. When the Plimit is less than the designated level, the maximum power value itself that satisfies the specific absorption rate (SAR) may be reduced, and thus, the difference between the RSRP values on each antenna path may also be reduced. Since the electronic device according to the comparative embodiment performs antenna switching based on the relative difference between the RSRP values on each antenna path, when the Plimit is less than the designated level, it may be difficult to perform the antenna switching because the relative difference between the RSRP values on each antenna path may be reduced.

According to the document, when the Plimit is less than the designated level, to overcome the limitation of difficulty in performing the antenna switching due to the reduced relative difference in the RSRP values on each antenna path, the electronic device 101 may determine different conditions for performing the antenna switching.

According to an embodiment, the processor 120 may confirm the RSRP at a specific cycle (e.g., 640 ms). The processor 120 may determine the difference between the RSRP values at the point in time when one cycle starts and the point in time when one cycle ends. The processor 120 may determine whether to perform the antenna switching based on the difference in the RSRP during one cycle and the difference in the max transmit power limit (MTPL) during one cycle. A specific cycle may vary depending on the configuration.

According to an embodiment, the processor 120 may calculate an average value of the RSRP difference determined in a first cycle and the RSRP difference determined in a second cycle. The processor 120 may determine whether to switch the antenna based on the difference between the average value of the RSRP difference and the max transmit power limit (MTPL) during one cycle. For example, the electronic device 101 may switch the antenna when the sum of a gain value of the RSRP and a gain value of the TX power of the antenna to be moved is greater than a specific threshold value. The electronic device 101 may determine whether the sum of a difference value (RSRP1 - RSRP0) of RSRP1 and RSRP0 and a gain value (TX1 MTPL - TX0 MTPL) of the TX Power at a specific point in time is greater than the threshold value. The electronic device 101 may determine to switch the antenna based on that the sum of the difference value (RSRP1 - RSRP0) of RSRP1 and RSRP0 and the gain value (TX1 MTPL - TX0 MTPL) of the TX Power is greater than the threshold value.

According to an embodiment, the processor 120 may determine which antenna to use to transmit a signal among the first antenna 501 and the second antenna 503 based on the maximum power value satisfying the specific absorption rate (SAR) on the first antenna 501 and the maximum power value of the electronic device for the first antenna 501.

According to an embodiment, the processor 120 may determine which antenna to use among the first antenna 501 and the second antenna 503 based on the difference between the maximum power value satisfying the specific absorption rate (SAR) on the first antenna 501 and the maximum power value satisfying the specific absorption rate (SAR) on the second antenna 503.

According to an embodiment, the processor 120 may determine which antenna to use among the first antenna 501 and the second antenna 503 based on the difference between the maximum power value satisfying the TAS and the maximum power value satisfying the TAS on the second antenna by the time average SAR (TAS) control scheme that confirms, based on the average value criterion (e.g., average power limit) on the first antenna 501, that the average power does not exceed the SAR criterion.

According to an embodiment, the processor 120 may determine the antenna to transmit the wireless signal as the second antenna 503 based on that the magnitude of the transmit power via the first antenna 501 is equal to the magnitude of the maximum power of the electronic device.

According to an embodiment, the processor 120 may determine the antenna to transmit the wireless signal as the second antenna based on that the difference between the maximum power value that the electronic device may have on the first antenna 501 and the average maximum power value satisfying the specific absorption rate (SAR) on the first antenna 501 exceeds the designated level.

According to an embodiment, in the situation where the power is transmitted via the first antenna 501, the processor 120 may change the antenna to transmit the wireless signal to the second antenna 503 based on that the maximum power value satisfying the specific absorption rate (SAR) for the first antenna 501 is less than the preset first level.

According to an embodiment, the processor 120 may determine to transmit the wireless signal using an antenna having a relatively large maximum power value satisfying the specific absorption rate (SAR) among the first antenna 501 and the second antenna 503 based on that the difference between the maximum power value satisfying the specific absorption rate (SAR) for the first antenna 501 and the maximum power value satisfying the specific absorption rate (SAR) for the second antenna 503 exceeds the designated level.

According to an embodiment, the processor 120 may determine the antenna to transmit the wireless signal as the second antenna 503 based on that the specific absorption rate (SAR) for the transmit power via the first antenna 501 exceeds the designated value.

According to an embodiment, the processor 120 may determine the antenna to transmit the wireless signal as the first antenna 501 based on that the magnitude of the transmit power via the second antenna 503 is equal to the magnitude of the maximum power of the electronic device 101.

According to an embodiment, in the situation where the power is transmitted via the second antenna 503, the processor 120 may change the antenna to transmit the wireless signal to the first antenna based on that the maximum power value satisfying the specific absorption rate (SAR) for the second antenna 503 is less than the preset first level.

According to an embodiment, the processor 120 may change the antenna to transmit the wireless signal based on that the difference between the maximum power value satisfying the specific absorption rate (SAR) on the first antenna 501 and the maximum power value satisfying the specific absorption rate (SAR) on the second antenna 503 exceeds the designated level.

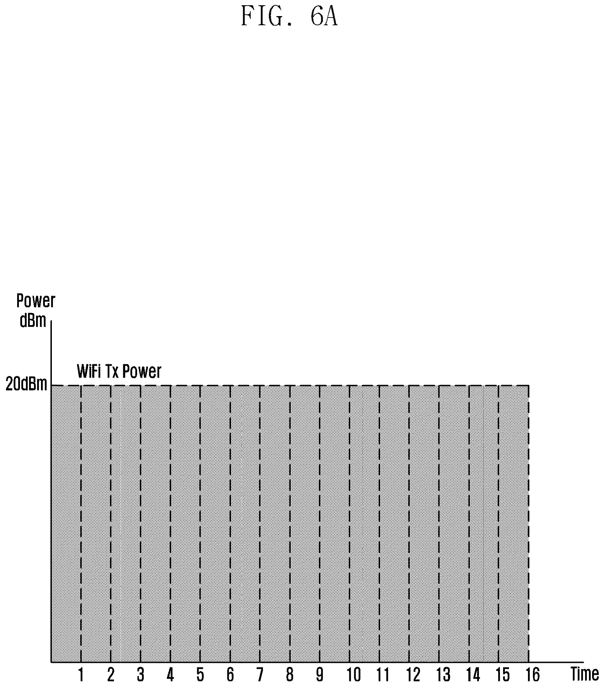

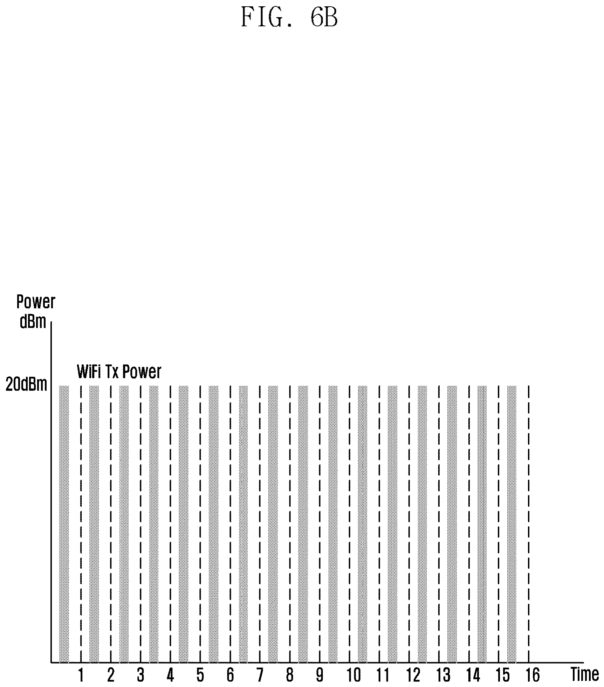

FIG. 6A illustrates a communication situation via Wi-Fi according to a comparative embodiment. FIG. 6B illustrates an embodiment in which a method other than antenna switching is used to prevent backoff in a communication situation via Wi-Fi.

In the graphs on FIGS. 6A and 6B, an X-axis may represent time, and a Y-axis may represent the intensity of received power. According to an embodiment, the electronic device (e.g., electronic device 101 of FIG. 1) may consume more power due to a short transmission frequency in an environment using VoLTE Call and Wi-Fi. When the power consumption on the antenna of the electronic device 101 exceeds the designated level, the backoff may occur to satisfy the SAR. The backoff operation may refer to an operation that does not use power to the maximum to stably operate the electronic device 101 but limits the power to use only up to a point below a certain level (e.g., -3 dB). The transmit power may be insufficient when the backoff operation occurs, so the communication may not proceed smoothly. The processor (e.g., the processor 120 of FIG. 1) may replace the antenna used for transmission to maintain the smooth communication. The process of replacing the antenna used for transmission to maintain smooth communication is described in FIG. 5.

According to FIG. 6B, the processor 120 may reduce the transmission frequency of Wi-Fi or limit the amount of data transmitted via Wi-Fi based on that the magnitude of the transmit power via the antenna in use is equal to the magnitude of maximum power of the electronic device 101. The processor 120 may reduce the transmission frequency of Wi-Fi to reduce the power consumption on the antenna and prevent the backoff phenomenon. Alternatively, the processor 120 may limit the amount of data transmitted via Wi-Fi to reduce the power consumption on the antenna and prevent the backoff phenomenon.

An electronic device 200 using WWAN + WLAN time average SAR may experience SAR backoff in WWAN when the SAR margin becomes insufficient due to continuous Tx of WLAN. When WWAN and WLAN use the same antenna on the electronic device 200, the occurrence frequency of the SAR backoff phenomenon may increase.

When the WWAN is in a call state such as VoLTE or VoNR, the WWAN backoff phenomenon may occur due to the SAR consumption of the WLAN. The backoff phenomenon may cause radio link failure (RLF) or mute phenomenon. The processor 120 may adjust the transmission frequency of Wi-Fi to prevent the backoff phenomenon.

According to an embodiment, the processor 120 may determine a priority in advance based on a data type (e.g., AC_VO (video), AC_VI (voice), AC_BE (Internet), AC_BK (background data)) transmitted via Wi-Fi. The processor 120 may limit the transmission of data with a relatively low priority based on that the magnitude of the transmit power via the antenna in use exceeds the designated level. The designated level for the magnitude of the transmit power may vary depending on the configuration. The priority for the data type transmitted via Wi-Fi may also vary depending on the configuration.

The processor 120 may reduce the transmission frequency of Wi-Fi based on that the difference between the maximum power value that the electronic device 200 may have on the first antenna (e.g., the first antenna 501 of FIG. 5) and the maximum power value satisfying the specific absorption rate (SAR) on the first antenna 501 exceeds the designated level, thereby reducing the power consumption on the antenna.

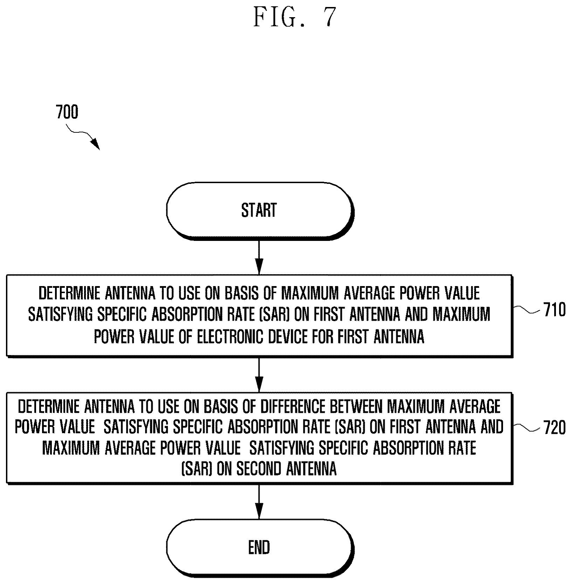

FIG. 7 sequentially illustrates a method for changing a transmission antenna path of an electronic device according to an embodiment.

The operations described with reference to FIG. 7 may be implemented based on instructions that may be stored in a computer recording medium or memory (e.g., the memory 130 of FIG. 1). The method 700 illustrated may be executed by the electronic device (e.g., electronic device 101 of FIG. 1) described above with reference to FIGS. 1 to 6B, and the technical features described above will be omitted below. The order of each operation of FIG. 7 may be changed, some operations may be omitted, and some operations may be performed simultaneously.

In operation 710, the processor (e.g., the processor 120 of FIG. 1) may determine an antenna to use based on the maximum power value satisfying the specific absorption rate (SAR) on the first antenna (e.g., the first antenna 501 of FIG. 5) and the maximum power value of the electronic device for the first antenna 501.

For example, the processor 120 may determine the antenna to transmit the wireless signal as the second antenna (e.g., the second antenna 503 of FIG. 5) based on that the difference between the maximum power value that the electronic device may have on the first antenna 501 and the maximum power value satisfying the specific absorption rate (SAR) on the first antenna 501 exceeds the designated level or based on that an event that causes the difference in the maximum power value occurs. The event may include, for example, a case where a receiver (RCV) of a microphone is used in a voice call situation. The difference between the maximum power value that the electronic device may have on the first antenna 501 and the maximum power value satisfying the specific absorption rate (SAR) on the first antenna 501 may refer to a value obtained by subtracting the Plimit from the Pmax.

The Pmax may include the maximum power value that the electronic device 101 may have on the first antenna 501. The average power limit may include the maximum power value satisfying the specific absorption rate (SAR) on the first antenna 501. The processor 120 may determine the antenna to transmit the wireless signal as the second antenna 503 based on that the value obtained by subtracting the average power limit from Pmax exceeds a designated value (e.g., 10 dB). Conversely, in the situation where the signal is transmitted via the second antenna 503, the processor 120 may determine the antenna to transmit the wireless signal as the first antenna 501 based on that the value obtained by subtracting the average power limit from the Pmax of the second antenna 502 exceeds the designated value (e.g., 10 dB).

In operation 720, the processor 120 may determine the antenna to use based on the difference between the maximum power value satisfying the specific absorption rate (SAR) on the first antenna 501 and the maximum power value satisfying the specific absorption rate (SAR) on the second antenna 503.

The processor 120 may change the antenna to transmit the wireless signal based on that the difference between the maximum power value satisfying the specific absorption rate (SAR) on the first antenna 501 and the maximum power value satisfying the specific absorption rate (SAR) on the second antenna 503 exceeds the designated level. In FIG. 7, operations 710 and 720 are described in order, but the order of each operation may be changed, and only one operation of operations 710 and 720 may be performed.

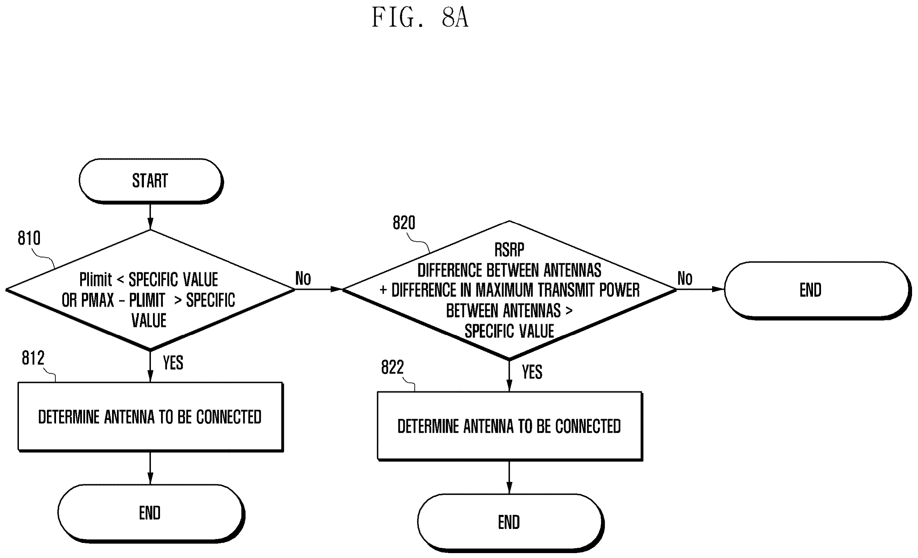

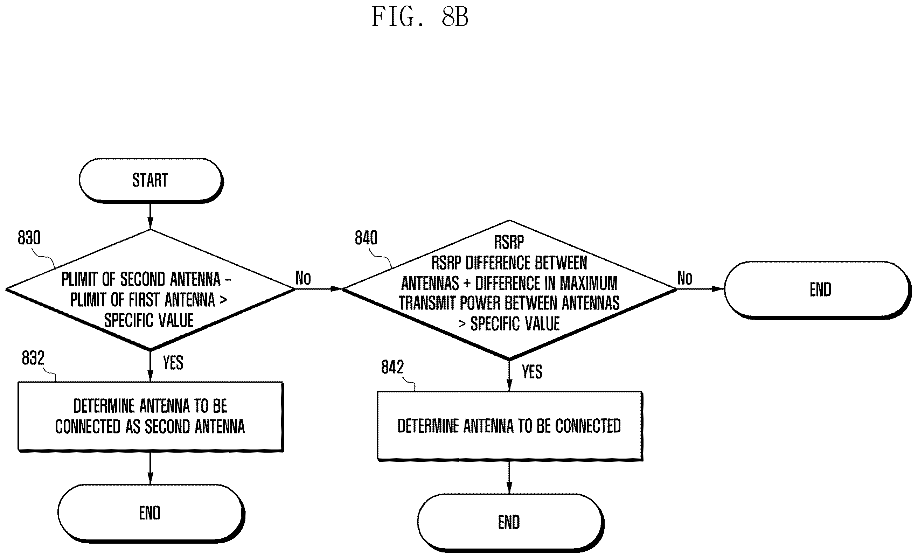

FIGS. 8A and 8B are flowcharts illustrating conditions for changing a transmission antenna path of an electronic device according to an embodiment.

The operations described with reference to FIGS. 8A and 8B may be implemented based on instructions that may be stored in a computer recording medium or memory (e.g., the memory 130 of FIG. 1). The method illustrated may be executed by the electronic device (e.g., electronic device 101 of FIG. 1) described above with reference to FIGS. 1 to 6B, and the technical features described above will be omitted below. The order of each operation of FIGS. 8A and 8B may be changed, some operations may be omitted, and some operations may be performed simultaneously.

In operation 810, the processor (e.g., the processor 120 of FIG. 1) may determine whether the Plimit is less than the designated level (e.g., 13 dB) or whether the value obtained by subtracting the Plimit from the Pmax exceeds the designated level (e.g., 8 to 10 dB). The designated level is only an example and may vary depending on the configuration.

The Pmax may include the maximum power value that the electronic device 101 may have on the first antenna 501. The Plimit may include the maximum power value satisfying the specific absorption rate (SAR) on the first antenna 501.

The processor 120 may determine the antenna to transmit the wireless signal as the second antenna 503 based on that the value obtained by subtracting the Plimit from Pmax exceeds the designated value (e.g., 10 dB). Conversely, in the situation where the signal is transmitted via the second antenna 503, the processor 120 may determine the antenna to transmit the wireless signal as the first antenna 501 based on that the value obtained by subtracting the Plimit from the Pmax exceeds the designated value (e.g., 10 dB).

In operation 812, the processor 120 may change the antenna connected to the electronic device 101 based on that Plimit is less than the designated level (e.g., 13 dB) or that the value obtained by subtracting the Plimit from the Pmax exceeds the designated level (e.g., 8 to 10 dB) (operation 810-Yes).

In operation 810, the processor 120 may perform operation 820 based on that the Plimit exceeds the designated level (e.g., 13 dB) or that the value obtained by subtracting the Plimit from the Pmax is less than the designated level (e.g., 8 to 10 dB) (operation 810-No).

In operation 820, according to an embodiment, the processor 120 may confirm the conditions for changing the antenna. For example, it may be determined whether the sum of the difference in the RSRP values between the first antenna 501 and the second antenna 503 and the difference in the maximum transmit power values between the first antenna 501 and the second antenna 503 exceeds the designated level.

The processor 120 may determine to change the connected antenna in operation 822 based on that the sum of the difference in the RSRP values between the first antenna 501 and the second antenna 503 and the difference in the maximum transmit power values exceeds the specific value (operation 820-Yes).

The processor 120 may end operation based on that the sum of the difference in the RSRP values between the first antenna 501 and the second antenna 503 and the difference in the maximum transmit power values does not exceed the specific value (operation 820-No).

Referring to FIG. 8B, in operation 830, the processor 120 may determine whether the value obtained by subtracting the Plimit value of the first antenna 501 from the Plimit value of the second antenna 503 exceeds the designated level. For example, the Plimit may include the maximum power value satisfying the specific absorption rate (SAR) on the first antenna 501 or the second antenna 503. According to an embodiment, in the case of the time average SAR (TSA), the Plimit may include the maximum power value configured based on the value of the average power measured over a certain period of time.

In operation 832, the processor 120 may determine the antenna to be connected as the second antenna 503 based on that the value obtained by subtracting the Plimit value of the first antenna 501 from the Plimit value of the second antenna 503 exceeds the designated level (operation 830-Yes). In the situation where the processor 120 is connected to the second antenna 503, the processor 120 may determine the antenna to be connected to the electronic device 101 as the first antenna 501 based on whether the value obtained by subtracting the Plimit value of the second antenna 503 from the Plimit value of the first antenna 501 exceeds the designated level.

The processor 120 may perform operation 840 based on that the value obtained by subtracting the Plimit value of the first antenna 501 from the Plimit value of the second antenna 503 is less than the designated level (operation 830-No).

In operation 840, the processor 120 may determine whether the sum of the difference in the RSRP between the first antenna 501 and the second antenna 503 and the difference in the maximum transmit power values between the first antenna 501 and the second antenna 503 exceeds the designated level.

The processor 120 may perform operation 842 based on that the sum of the difference in the RSRP between the first antenna 501 and the second antenna 503 and the difference in the maximum transmit power values between the first antenna 501 and the second antenna 503 exceeds the designated level (operation 840-Yes).

In operation 842, the processor 120 may change the connected antenna to another antenna.

The processor 120 may end the antenna switching operation based on that the sum of the difference in the RSRP between the first antenna 501 and the second antenna 503 and the difference in the maximum transmit power values between the first antenna 501 and the second antenna 503 does not exceed the designated level (operation 840-No).

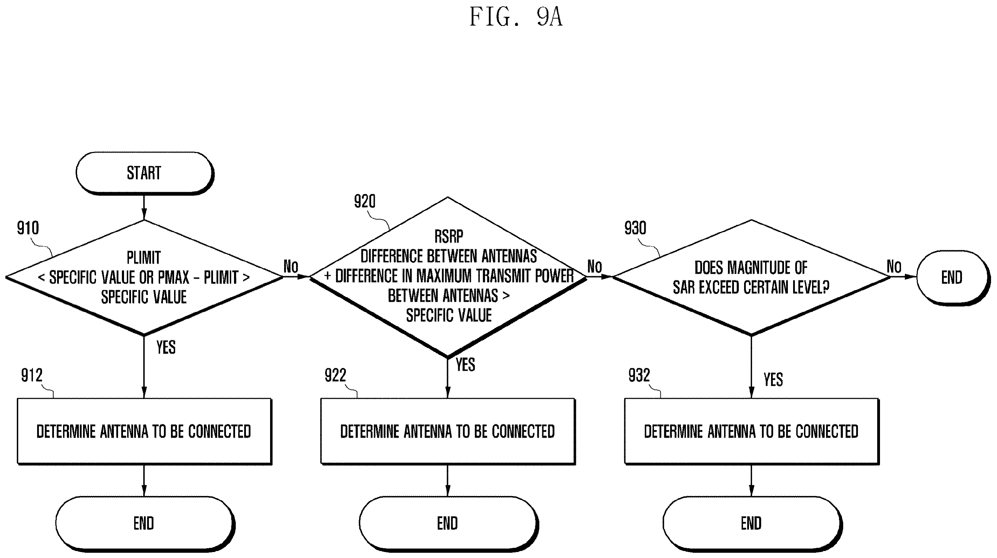

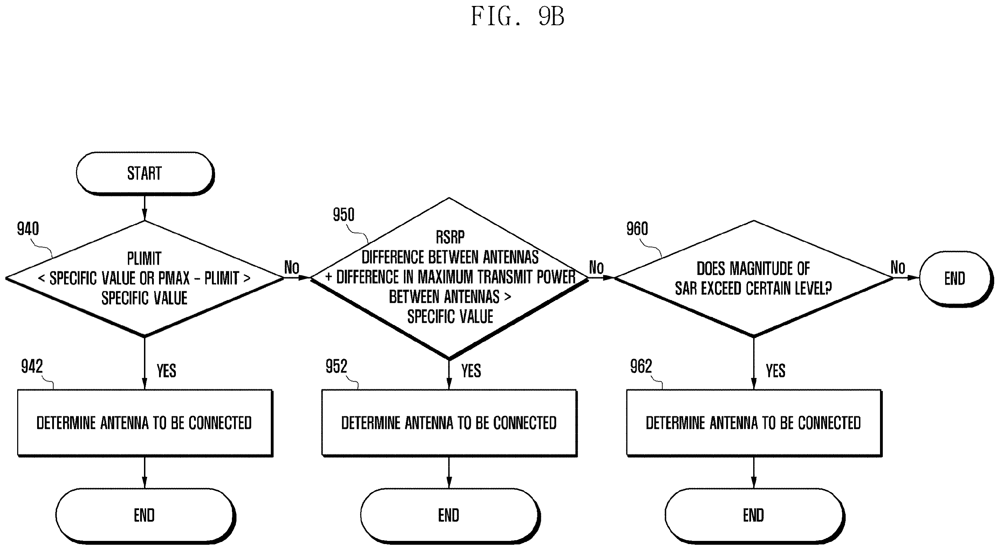

FIGS. 9A and 9B are flowcharts illustrating the conditions for changing the transmission antenna path of the electronic device according to an embodiment.

The operations described with reference to FIGS. 9A and 9B may be implemented based on instructions that may be stored in a computer recording medium or memory (e.g., the memory 130 of FIG. 1). The method illustrated may be executed by the electronic device (e.g., electronic device 101 of FIG. 1) described above with reference to FIGS. 1 to 6B, and the technical features described above will be omitted below. The order of each operation of FIGS. 9A and 9B may be changed, some operations may be omitted, and some operations may be performed simultaneously.

In operation 910, the processor (e.g., the processor 120 of FIG. 1) may determine whether the Plimit is less than the designated level (e.g., 13 dB) or whether the value obtained by subtracting the Plimit from the Pmax exceeds the designated level (e.g., 8 to 10 dB). The designated level is only an example and may vary depending on the configuration.

The Pmax may include the maximum power value that the electronic device 101 may have on the first antenna 501. The Plimit may include the maximum power value satisfying the specific absorption rate (SAR) on the first antenna 501.

The processor 120 may determine the antenna to transmit the wireless signal as the second antenna 503 based on that the value obtained by subtracting the Plimit from Pmax exceeds the designated value (e.g., 10 dB). Conversely, in the situation where the signal is transmitted via the second antenna 503, the processor 120 may determine the antenna to transmit the wireless signal as the first antenna 501 based on that the value obtained by subtracting the Plimit from the Pmax exceeds the designated value (e.g., 10 dB).

In operation 912, the processor 120 may change the antenna connected to the electronic device 101 based on that the Plimit is less than the designated level (e.g., 13 dB) or that the value obtained by subtracting the Plimit from the Pmax exceeds the designated level (e.g., 8 to 10 dB) (operation 910-Yes).

In operation 910, the processor 120 may perform operation 920 based on that the Plimit exceeds the designated level (e.g., 13 dB) or that the value obtained by subtracting the Plimit from the Pmax is less than the designated level (e.g., 8 to 10 dB) (operation 910-No).

In operation 920, the processor 120 may determine whether the sum of the difference in the RSRP values between the first antenna 501 and the second antenna 503 and the difference in the maximum transmit power values between the first antenna 501 and the second antenna 503 exceeds the designated level.

The processor 120 may determine to change the connected antenna in operation 922 based on that the sum of the difference in the RSRP values between the first antenna 501 and the second antenna 503 and the difference in the maximum transmit power values exceeds the specific value (operation 920-Yes).

The processor 120 may perform operation 930 based on that the sum of the difference in the RSRP values between the first antenna 501 and the second antenna 503 and the difference in the maximum transmit power values does not exceed the specific value (operation 920-No).

In operation 930, the processor 120 may determine whether the magnitude of the SAR exceeds a certain level for a designated time. The specific absorption rate (SAR) may refer to an electromagnetic wave absorption rate. The specific absorption rate (SAR) may refer to a rate (W/kg) of energy absorbed per unit mass of a biological tissue. When the magnitude of the SAR exceeds a certain level, since the electromagnetic waves may have a significant effect on the human body and may be harmful, the electronic device 101 may perform the backoff. When the electronic device 101 performs the backoff, the transmit power may be lowered, so the mute may occur or the data transmission may not be smooth. In order to prevent the electronic device 101 from performing the backoff, the transmission antenna may be replaced with another antenna.

The electronic device 101 may include the time average SAR (TAS) that controls the magnitude of the SAR based on the average value so that the magnitude of the SAR does not exceed a certain level for a certain period of time. For example, the electronic device 101 may measure power over a certain period of time and change the average maximum power value that changes the maximum power value of the SAR. The electronic device 101 may control the TAS to not cause the backoff operation by changing the maximum average power value (i.e.,average power limit) of the TAS in the situation where the electronic device 101 operates based on the TAS.

The processor 120 may determine to change the connected antenna in operation 932 based on that the magnitude of the SAR exceeds a certain level (operation 930-Yes). The processor 120 may end the antenna switching operation based on that the magnitude of the SAR does not exceed a certain level (operation 930-No).

Referring to FIG. 9B, in operation 940, the processor 120 may determine whether the maximum average power value (i.e., average power limit) is less than the designated level (e.g., 13 dB) or whether the value obtained by subtracting the maximum average power value (i.e., average power limit) from Pmax exceeds the designated level (e.g., 8 to 10 dB). The designated level is only an example and may vary depending on the configuration.

The processor 120 may determine the antenna to transmit the wireless signal as the second antenna 503 based on that the value obtained by subtracting the maximum average power value (i.e., average power limit) from Pmax exceeds the designated value (e.g., 10 dB). Conversely, in the situation where the signal is transmitted via the second antenna 503, the processor 120 may determine the antenna to transmit the wireless signal as the first antenna 501 based on that the value obtained by subtracting the maximum average power value (i.e., average power limit) from the Pmax exceeds the designated value (e.g., 10 dB).

In operation 942, the processor 120 may change the antenna connected to the electronic device 101 based on that maximum average power value (i.e., average power limit) is less than the designated level (e.g., 13 dB) or that the value obtained by subtracting the maximum average power value (i.e., average power limit) from the Pmax exceeds the designated level (e.g., 8 to 10 dB) (operation 940-Yes).

In operation 940, the processor 120 may perform operation 950 based on that the maximum average power value (i.e., average power limit (Plimit)) exceeds the designated level (e.g., 13 dB) or that the value obtained by subtracting the maximum average power value (i.e., average power limit) from the Pmax is less than the designated level (e.g., 8 to 10 dB) (operation 940-No).

In operation 950, the processor 120 may determine whether the sum of the difference in the RSRP values between the first antenna 501 and the second antenna 503 and the difference in the maximum transmit power values between the first antenna 501 and the second antenna 503 exceeds the designated level.

The processor 120 may determine to change the connected antenna in operation 952 based on that the sum of the difference in the RSRP values between the first antenna 501 and the second antenna 503 and the difference in the maximum transmit power values exceeds the specific value (operation 950-Yes).

The processor 120 may perform operation 960 based on that the sum of the difference in the RSRP values between the first antenna 501 and the second antenna 503 and the difference in the maximum transmit power values does not exceed the specific value (operation 950-No).

In operation 960, the processor 120 may determine whether the transmit power of the antenna is equal in magnitude to the maximum power that the electronic device 101 may apply to the antenna. When the transmit power of the antenna is equal in magnitude to the maximum power that the electronic device 101 may apply to the antenna, the electronic device 101 may perform the backoff because the power consumption is high. When the electronic device 101 performs the backoff, the transmit power may be lowered, so the mute may occur or the data transmission may not be smooth. In order to prevent the electronic device 101 from performing the backoff, the transmission antenna may be replaced with another antenna.

The processor 120 may determine to change the connected antenna in operation 962 based on that the transmit power of the antenna is equal in magnitude to the maximum power that the electronic device 101 may apply to the antenna (operation 960-Yes). The processor 120 may end the antenna switching operation based on that the transmit power of the antenna is not equal in magnitude to the maximum power that the electronic device 101 may apply to the antenna (operation 960-No).

According to an embodiment, the processor may, based on the magnitude of the maximum power of the signal output via the first antenna to satisfy the specific absorption rate (SAR) configured in the electronic device and the maximum transmit power level of the signal output via at least one of the first antenna and the second antenna configured by the cellular network, select the antenna to output the signal, from among the first antenna and the second antenna. Alternatively, the processor may select, based on the difference between the magnitude of the maximum power of the signal output via the first antenna to satisfy the specific absorption rate (SAR) configured in the electronic device and the magnitude of the maximum power of the signal output via the second antenna to satisfy the specific absorption rate (SAR) configured in the electronic device, the antenna to output the signal from among the first antenna and the second antenna.

According to an embodiment, the processor may determine to output the signal using the second antenna based on that the magnitude of the power of the signal output via the first antenna is equal to the magnitude of the maximum transmit power level of the first antenna.

According to an embodiment, the processor may determine the antenna to transmit the wireless signal as the second antenna based on that the difference between the magnitude of the maximum transmit power level of the first antenna and the magnitude of the maximum power of the signal output via the first antenna to satisfy the specific absorption rate (SAR) configured in the electronic device exceeds the designated level.

According to an embodiment, the processor may determine the SAR margin by subtracting the value of the current power based on the maximum average power value satisfying the SAR. The processor may determine the time until the current power reaches the maximum average power and the backoff operation occurs based on the SAR margin. The processor may determine that the larger the SAR margin, the longer the time remaining until the backoff operation occurs.

According to an embodiment, in the situation where the signal is transmitted via the first antenna, the processor determines the antenna to transmit the signal as the second antenna based on that the magnitude of the maximum power of the signal output via the first antenna to satisfy the specific absorption rate (SAR) configured in the electronic device is less than a preset first level.

According to an embodiment, the processor may determine to transmit the wireless signal using the antenna having the relatively large magnitude of the maximum power of the output signal to satisfy the specific absorption rate (SAR) among the first antenna and the second antenna based on that the difference between the magnitude of the maximum power of the signal output via the first antenna to satisfy the specific absorption rate (SAR) configured in the electronic device and the magnitude of the maximum power of the signal output via the second antenna to satisfy the specific absorption rate (SAR) configured in the electronic device exceeds the designated level.

According to an embodiment, the processor may determine to output the signal using the second antenna based on that the magnitude of the signal output via the first antenna exceeds the first level. The first level may be determined as the value having the certain ratio of the magnitude of the maximum power of the signal output via the first antenna for satisfying the specific absorption rate (SAR) configured in the electronic device.

According to an embodiment, the processor may determine to output the signal using the first antenna based on that the magnitude of the signal output via the second antenna is equal to the magnitude of the maximum transmit power level of the signal output via the second antenna.

According to an embodiment, in the situation where the power is transmitted via the second antenna, the processor may determine to output the signal using the first antenna based on that the magnitude of the maximum power of the signal output via the second antenna to satisfy the specific absorption rate (SAR) configured in the electronic device is less than the preset level.

According to an embodiment, the processor may reduce the transmission frequency of Wi-Fi or limit the amount of data transmitted via the Wi-Fi based on that the magnitude of the signal output via at least one of the first antenna and the second antenna is equal to the maximum transmit power level.

According to an embodiment, the processor may determine the priority based on the type of data transmitted via the Wi-Fi, and limit the transmission of data having a relatively low priority based on that the magnitude of the signal output via at least one of the first antenna and the second antenna exceeds the designated level.

The embodiments of the present document disclosed in this specification and drawings present merely specific examples to easily describe the technical contents according to the embodiments of the present document and to help understand the embodiments of the present document, and are not intended to limit the scope of the embodiments of the present document. Therefore, the scope of an embodiment of the present document should be interpreted to include all changes or modified forms derived based on the technical idea of an embodiment of the present document, in addition to the embodiments of the present document.

## Claims

1. An electronic device, comprising:
a first antenna;
a second antenna disposed at a location different from a location in which the first antenna is disposed; and
a processor,
wherein the processor is configured to select, based on a magnitude of maximum average power of a signal output via the first antenna to satisfy a time average specific absorption rate (SAR) configured in the electronic device and a maximum transmit power limit of a signal output via at least one of the first antenna and the second antenna configured by a cellular network, an antenna to output the signal from among the first antenna and the second antenna, or
select, based on a difference between a magnitude of maximum average power of a signal output via the first antenna to satisfy a specific absorption rate (SAR) configured in the electronic device and a magnitude of maximum average power of a signal output via the second antenna to satisfy the specific absorption rate (SAR) configured in the electronic device, the antenna to output the signal from among the first antenna and the second antenna.

2. The electronic device of claim 1, wherein the processor determines to output the signal using the second antenna based on that the magnitude of the power of the signal output via the first antenna is equal to the magnitude of the maximum transmit power limit (MTP) of the first antenna.

3. The electronic device of claim 1, wherein the processor determines an antenna to transmit a wireless signal as the second antenna based on that the difference between the magnitude of the maximum transmit power limit (MTPL) of the first antenna and the magnitude of the maximum average power of the signal output via the first antenna to satisfy the specific absorption rate (SAR) configured in the electronic device exceeds a designated level.

4. The electronic device of claim 1, wherein, in a situation where the signal is transmitted via the first antenna, the processor determines an antenna to transmit the signal as the second antenna based on that the magnitude of the maximum average power of the signal output via the first antenna to satisfy the specific absorption rate (SAR) configured in the electronic device is less than a preset first level.

5. The electronic device of claim 1, wherein the processor determines to transmit a wireless signal using an antenna having a relatively large magnitude of maximum average power of an output signal to satisfy the specific absorption rate (SAR) among the first antenna and the second antenna based on that the difference between the magnitude of the maximum average power of the signal output via the first antenna to satisfy the specific absorption rate (SAR) configured in the electronic device and the magnitude of the maximum average power of the signal output via the second antenna to satisfy the specific absorption rate (SAR) configured in the electronic device exceeds a designated level.

6. The electronic device of claim 1, wherein the processor determines to output the signal using the second antenna based on that the magnitude of the signal output via the first antenna exceeds a first level, and
the first level is determined as a value having a certain ratio of a magnitude of maximum power of the signal output via the first antenna to satisfy the specific absorption rate (SAR) configured in the electronic device.

7. The electronic device of claim 1, wherein the processor determines to output the signal using the first antenna based on that the magnitude of the signal output via the second antenna is equal to the magnitude of the maximum transmit power limit (MTP) of the signal output via the second antenna.

8. The electronic device of claim 1, wherein, in a situation where power is transmitted via the second antenna, the processor determines to output the signal using the first antenna based on that the magnitude of the maximum average power of the signal output via the second antenna to satisfy the specific absorption rate (SAR) configured in the electronic device is less than a preset level.

9. The electronic device of claim 1, wherein the processor reduces a transmission frequency of Wi-Fi or limits an amount of data transmitted via the Wi-Fi based on that the magnitude of the signal output via at least one of the first antenna and the second antenna is equal to the maximum transmit power limit (MTPL), in a voice over LTE (VoLTE) call situation.

10. The electronic device of claim 9, wherein the processor determines a priority based on a type of data transmitted via the Wi-Fi, and limits transmission of data having a relatively low priority based on that the magnitude of the signal output via at least one of the first antenna and the second antenna exceeds a designated level.

11. A method for operating an electronic device, comprising:
selecting, based on a magnitude of maximum power of a signal output via a first antenna to satisfy a specific absorption rate (SAR) configured in the electronic device and a maximum transmit power level of a signal output via at least one of the first antenna and a second antenna configured by a cellular network, an antenna to output the signal from among the first antenna and the second antenna; and
selecting, based on a difference between the magnitude of the maximum power of the signal output via the first antenna to satisfy the specific absorption rate (SAR) configured in the electronic device and a magnitude of maximum power of a signal output via the second antenna to satisfy the specific absorption rate (SAR) configured in the electronic device, the antenna to output the signal from among the first antenna and the second antenna.

12. The method of claim 11, further comprising:
determining an antenna to transmit a wireless signal as the second antenna based on that a magnitude of power of the signal output via the first antenna is equal to a magnitude of a maximum transmit power level of the first antenna.

13. The method of claim 11, further comprising:
determining an antenna to transmit a wireless signal as the second antenna based on that a difference between a magnitude of a maximum transmit power level of the first antenna and the magnitude of the maximum power of the signal output via the first antenna to satisfy the specific absorption rate (SAR) configured in the electronic device exceeds a designated level.

14. The method of claim 11, further comprising:
in a situation where the power is transmitted via the first antenna, determining the antenna to transmit the signal as the second antenna based on that the magnitude of the maximum power of the signal output via the first antenna to satisfy the specific absorption rate (SAR) configured in the electronic device is less than a preset first level.

15. The method of claim 11, further comprising:
determining to transmit a wireless signal using an antenna having a relatively large magnitude of maximum power of an output signal to satisfy the specific absorption rate (SAR) among the first antenna and the second antenna based on that the difference between the magnitude of the maximum power of the signal output via the first antenna to satisfy the specific absorption rate (SAR) configured in the electronic device and the magnitude of the maximum power of the signal output via the second antenna to satisfy the specific absorption rate (SAR) configured in the electronic device exceeds a designated level.
